# EUROPEAN PATENT APPLICATION

(11) **EP 4 455 315 A1**
(43) Date of publication of application: **30.10.2024**
(21) Application number: 22911892.2
(22) Date of filing: 20.12.2022
(51) Int. Cl.: C21D 8/12, H01F 1/147

(54) **ANNEALING SEPARATING AGENT COMPOSITION FOR GRAIN ORIENTED ELECTRICAL STEEL SHEET AND METHOD FOR MANUFACTURING GRAIN ORIENTED ELECTRICAL STEEL SHEET**

(30) Priority: 21.12.2021 KR 20210183661
(71) Applicant: POSCO Co., Ltd, Pohang-si, Gyeongsangbuk-do 37859 (KR)
(72) Inventor: KWON, Min Serk, Pohang-si, Gyeongsangbuk-do 37859 (KR)
(74) Representative: Meissner Bolte Partnerschaft mbB
(86) International application number: PCT/KR2022/020890
(87) International publication number: WO 2023/121259

(57) **Abstract**

An annealing separating agent composition for a grain oriented electrical steel sheet according to an embodiment of the present invention contains 25-80 wt% of a boron compound on the basis of 100 wt% of the total solid content, with the remainder comprising at least one among magnesium oxide and magnesium hydroxide.

## Description

### [Technical Field]

An exemplary embodiment of the present disclosure relates to an annealing separating agent composition for a grain-oriented electrical steel sheet and a method for manufacturing a grain-oriented electrical steel sheet. More particularly, an exemplary embodiment of the present disclosure relates to an annealing separating agent composition for a grain-oriented electrical steel sheet including a boron compound and a method for manufacturing a grain-oriented electrical steel sheet.

### [Background Art]

In general, a grain-oriented electrical steel sheet includes a Si component in a steel sheet, and since it has a texture of which the crystal grain orientation is aligned in a {110}<001 > direction, it refers to an electrical steel sheet having extremely excellent magnetic properties in a rolling direction.

Though a commonly known grain-oriented electrical steel sheet has improved iron loss and promoted noise reduction effect due to magnetic deformation by forming an insulating coating film on a forsterite (Mg₂SiO₄)-based base coating film and imparting tensile stress to a steel sheet using a difference in a thermal expansion coefficient of the insulating coating film, there is a limit to satisfying a currently required characteristic level of a high grade grain-oriented electrical steel sheet.

In order to improve forsterite coating film properties in a conventional process of manufacturing a grain-oriented electrical steel sheet, a method for improving surface properties by adding TiO₂ powder to MgO in a step of applying an anti-fusion agent including MgO as a main component has been suggested.

In addition, in order to improve coating film tension as compared with conventional forsterite, a method of applying kaolinite (Al₄Si₄O₁₀(OH)₈) as an annealing separating agent on a surface of decarbonized annealing plate to perform finish annealing, thereby forming a composite coating film formed of alumina and silica on a surface of a steel sheet has been suggested. However, the method, which is a technology of decomposing kaolinite to form a double-structured composite coating film formed of an upper portion of alumina and a lower portion of silica, has problems in being difficult to perform control in a second recrystallization annealing process, being difficult to form uniform quality, and having poor adhesiveness due to a silica coating film formed in the lower portion.

In addition, as a method for improving iron loss of a grain-oriented electrical steel sheet, a method of applying a mixture of MgCl₂ and colloidal silica or alumina powder as an anti-fusion agent to remove a forsterite coating film is known. However, the method has problems of poor iron loss of an electrical steel sheet due to the removal of the forsterite coating and a difficulty in forming an insulating coating film in a future process.

### [Disclosure]

### [Technical Problem]

The present disclosure attempts to provide an annealing separating agent composition for a grain-oriented electrical steel sheet and a method for manufacturing a grain-oriented electrical steel sheet. Specifically, the present disclosure attempts to provide an annealing separating agent composition for a grain-oriented electrical steel sheet capable of improving iron loss of a material with excellent adhesiveness and coating film tension, and a method for manufacturing a grain-oriented electrical steel sheet.

### [Technical Solution]

An exemplary embodiment of the present disclosure provides an annealing separating agent composition for a grain-oriented electrical steel sheet including: 25 to 80 wt% of a boron compound and a remainder of one or more of magnesium oxide and magnesium hydroxide, based on a total of 100 wt% of the solid content.

The boron compound may include one or more of BBr₃, BCl₃, BF, BF₃, BI₃, BN, B(NO₃)₃, B(OH)₃, BP, BPO₄, B₂F₄, B₂Cl₄, B₂H₆, BH₃NH₃, B₂O, B₂O₃, B₂S₃, B₄C, B₆O, B₅H₉, B₅H₁₁, B₆H₁₀, B₆H₁₂, LiBH₄, H₃BO₃, Na₂B₄O₇, H₂B₄O₇, B₂O₃, B₂O, B₂C, MgB₂, H[B(OH)₄], H[BF(OH)₃], H[BF₂(OH)₂], H[BF₃(OH)], and H[BF₄].

The annealing separating agent composition for a grain-oriented electrical steel sheet according to an exemplary embodiment of the present disclosure may further include 0.1 to 20 wt% of a metal hydroxide

The metal hydroxide may include one or more of Ni(OH)₂, Co(OH)₂, Cu(OH)₂, Sr(OH)₂, Ba(OH)₂, Pd(OH)₂, In(OH)₃, Bi(OH)₃, and Sn(OH)₂.

The annealing separating agent composition for a grain-oriented electrical steel sheet according to an exemplary embodiment of the present disclosure may further include 0.5 to 10 wt% of ceramic powder.

The ceramic powder may include one or more of MnO, Al₂O₃, SiO₂, TiO₂, and ZrO₂.

The annealing separating agent composition for a grain-oriented electrical steel sheet according to an exemplary embodiment of the present disclosure may further include 1 to 10 wt% of one or more of Sb₂(SO₄)₃, SrSO₄, and BaSO₄.

Another exemplary embodiment of the present disclosure provides a grain-oriented electrical steel sheet including: a grain-oriented electrical steel sheet substrate and a coating film which is placed on one or both surfaces of the grain-oriented electrical steel sheet substrate and includes boron and forsterite. The coating film may include a boron agglomerate and the boron agglomerate may have an average particle diameter of 1 to 500 nm.

The boron agglomerate may be included at 1 to 45% by area with respect to the total area of the coating film.

The coating film may include 1 to 40 wt% of B, 10 to 70 wt% of Mg, 3 to 70 wt% of Si, 10 to 90 wt% of O, and a remainder of Fe.

The grain-oriented electrical steel sheet according to an exemplary embodiment of the present disclosure may further include a ceramic layer placed on the coating film.

The ceramic layer may include ceramic powder and a metal phosphate.

The ceramic powder may include one or more selected from Al₂O₃, SiO₂, TiO₂, ZrO₂, Al₂O₃·TiO₂, Y₂O₃, 9Al₂O₃·2B₂O₃, BN, CrN, BaTiOs, SiC, and TiC.

Still another exemplary embodiment of the present disclosure provides a method for manufacturing a grain-oriented electrical steel sheet including: preparing a steel slab; hot rolling the steel slab to manufacture a hot rolled sheet; cold rolling the hot rolled sheet to manufacture a cold rolled sheet; first recrystallization annealing the cold rolled sheet; applying an annealing separating agent on a surface of the first recrystallization annealed steel sheet; and second recrystallization annealing the steel sheet coated with the annealing separating agent, wherein the annealing separating agent includes 25 to 80 wt% of a boron compound and a remainder of one or more of magnesium oxide and magnesium hydroxide, based on a total of 100 wt% of the solid content.

After the second recrystallization annealing, forming a ceramic layer on a coating film including boron and forsterite may be further included.

The coating film including boron and forsterite may include 1 to 40 wt% of B, 10 to 70 wt% of Mg, 3 to 70 wt% of Si, 10 to 90 wt% of O, and a remainder of Fe.

The forming of a ceramic layer may be forming a ceramic layer by spraying ceramic powder on the coating film.

The forming of a ceramic layer may be forming a ceramic layer by applying a composition for forming a ceramic layer including ceramic powder and a metal phosphate on the coating film.

The ceramic powder used in the forming of a ceramic layer may include one or more selected from Al₂O₃, SiO₂, TiO₂, ZrO₂, Al₂O₃·TiO₂, Y₂O₃, 9Al₂O₃·2B₂O₃, BN, CrN, BaTiOs, SiC 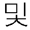 TiC.

The first recrystallization annealing of the cold rolled sheet may include: decarbonization annealing and nitriding annealing the cold rolled sheet simultaneously; or decarbonization annealing and then nitriding annealing the cold rolled sheet.

### [Advantageous Effects]

According to an exemplary embodiment of the present disclosure, a grain-oriented electrical steel sheet having excellent iron loss and magnetic flux density and excellent adhesiveness and insulating properties of a coating film, and a method for manufacturing the same.

### [Description of the Drawings]

FIG. 1 is a schematic side cross-sectional view of a grain-oriented electrical steel sheet according to an exemplary embodiment of the present disclosure.
FIG. 2 is a scanning electron micrograph (SEM) of a coating film of the grain-oriented electrical steel sheet manufactured in Example 9.
FIG. 3 is a scanning electron micrograph (SEM) of a coating film of the grain-oriented electrical steel sheet manufactured in Comparative Example 2.
FIG. 4 is results of electron probe micro-analysis (EPMA) of a B element of a coating film of the grain-oriented electrical steel sheet manufactured in Example 3.
FIG. 5 is results of electron probe micro-analysis (EPMA) of a B element of a coating film of the grain-oriented electrical steel sheet manufactured in Example 6.
FIG. 6 is results of electron probe micro-analysis (EPMA) of a B element of a coating film of the grain-oriented electrical steel sheet manufactured in Comparative Example 3.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

In addition, in the present disclosure, 1 ppm refers to 0.0001%.

In an exemplary embodiment of the present disclosure, the meaning of further including an additional component is replacing a remainder by the addition amount of the additional component.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, an exemplary embodiment of the present disclosure will be described in detail so that a person with ordinary skill in the art to which the present disclosure pertains may easily carry out the disclosure. As those skilled in the art would realize, the described embodiments may be modified in various different ways, all without departing from the spirit or scope of the present disclosure.

The annealing separating agent composition for a grain-oriented electrical steel sheet according to an exemplary embodiment of the present disclosure includes one or more of 25 to 80 wt% of a boron compound and a remainder of one or more of magnesium oxide and magnesium hydroxide, based on the solid content. Herein, "based on the solid content" means that a solid content excluding volatile components such as a solvent is set to 100 wt%.

Hereinafter, the annealing separating agent composition according to an exemplary embodiment of the present disclosure will be described in detail for each component.

The annealing separating agent composition according to an exemplary embodiment of the present disclosure is applied on a grain-oriented electrical steel sheet substrate 10 to form a coating film 20 including boron and forsterite.

Since boron has a low thermal expansion coefficient (5×10⁻⁶/°C), it easily improves iron loss by imparting coating film tension. In addition, since boron has relatively low elasticity, it has excellent heat-resistant impact resistance.

A forsterite (Mg₂SiO₄) coating film which is an existing first coating film is formed by a chemical reaction between an internal oxide layer (SiO₂) present on a surface of the steel sheet during second recrystallization annealing and magnesium oxide (MgO) in an annealing separating agent. The existing forsterite coating film has an excellent sheet sticking prevention function by a contact between coils during a second recrystallization annealing process, but has poor coating film tension imparting ability and insulating properties, and thus, has limitation.

In an exemplary embodiment of the present disclosure, coating film tension imparting ability and insulating properties may be significantly improved by adding the boron compound, in addition to magnesium oxide or magnesium hydroxide. However, when the boron compound is used alone as the annealing separating agent, a difference in a thermal expansion coefficient in a second recrystallization annealing process is extreme, and the coating film is peeled off. In addition, when a boron component is used as the annealing separating agent, it is not dispersed in a solvent due to its high specific gravity and settles down, and thus, uniform application on the surface of an electrical steel sheet may be difficult. In an exemplary embodiment of the present disclosure, boron is not used alone, but is used as a mixture with magnesium oxide or magnesium hydroxide.

When kaolinite (Al₄Si₄O₁₀(OH)₈) is included as the annealing separating agent, controlling in the second recrystallization annealing process is difficult, so that it is difficult to form uniform quality, and adhesiveness is poor due to a silica coating film formed in the lower portion by kaolinite decomposition.

In an exemplary embodiment of the present disclosure, the annealing separating agent composition includes 25 to 80 wt% of the boron compound based on the solid content. When the boron compound is included less, a forsterite coating film is not sufficiently formed, so that adhesiveness may be poor. In addition, improvement of coating film tension imparting ability and insulating properties may not be sufficient. When the boron compound is included too much, a problem may occur in uniform applying the annealing separating agent. Therefore, the boron compound may be included in the content range described above. More specifically, the boron compound may be included at 30 to 70 wt%.

The boron compound may be present in various forms. Specifically, it may be in the form of chloride, oxide, nitride, sulfide, and the like, and more specifically, it may include one or more selected from BBr₃, BCl₃, BF, BF₃, BI₃, BN, B(NO₃)₃, B(OH)₃, BP, BPO₄, B₂F₄, B₂Cl₄, B₂H₆, BH₃NH₃, B₂O, B₂O₃, B₂S₃, B₄C, B₆O, B₅H₉, B₅H₁₁, B₆H₁₀, B₆H₁₂, LiBH₄, H₃BO₃, Na₂B₄O₇, H₂B₄O₇, B₂O₃, B₂O, B₂C, MgB₂, H[B(OH)₄], H[BF(OH)₃], H[BF₂(OH)₂], H[BF₃(OH)], and H[BF₄]. When two or more boron compounds are included, its combined amount may be 25 to 80 wt%.

In an exemplary embodiment of the present disclosure, the annealing separating agent composition may include 5 parts by weight to 600 parts by weight of the boron compound with respect to 100 parts by weight of one or more of magnesium oxide and magnesium hydroxide, based on the mass of the solid content. Specifically, the boron compound may be included at 10 parts by weight to 500 parts by weight, and more specifically, included at 50 parts by weight to 300 parts by weight. When the content of boron is too low as compared with magnesium oxide or magnesium hydroxide, a forsterite coating film is not sufficiently formed, so that adhesives may be poor. In addition, coating film tension imparting ability and insulating property imparting ability may not be sufficient, and when the content of boron is too much, the function of the annealing separating agent is deteriorated, and sheets may stick to each other in a high temperature annealing process.

The metal hydroxide serves to change the surface properties from hydrophobic to hydrophilic by a chemical reaction with the surface of the boron compound. Therefore, it helps to significantly improve dispersibility of a boron compound and form a uniform forsterite coating film. In addition, the metal hydroxide has a lowered melting point and has a lower coating film formation temperature in the second recrystallization annealing process, thereby securing surface properties of good quality. In addition, since the forsterite coating film produced in a lower temperature range has an effect of suppressing decomposition of an AIN-based inhibitor which has a decisive influence on second recrystallization formation, excellent magnetic quality may be secured.

In an exemplary embodiment of the present disclosure, the annealing separating agent composition may further include 0.1 to 20 wt% of the metal hydroxide. When the metal hydroxide is included too small, there may be a problem in sufficiently expressing the effects described above. When the metal hydroxide is included too much, the metal component diffuses inside to form a film, and thus, forsterite formation behavior becomes non-uniform. When the annealing separating agent further includes an additional component, the additional component replaces magnesium oxide and magnesium hydroxide as a reminder.

Herein, the metal hydroxide refers to a metal hydroxide other than the magnesium hydroxide described above. Specifically, the metal hydroxide may include one or more selected from Cr(OH)₃, Ni(OH)₂, Co(OH)₂, Cu(OH)₂, Sr(OH)₂, Ba(OH)₂, Pd(OH)₂, In(OH)₃, Bi(OH)₃, and Sn(OH)₂.

Magnesium oxide (MgO) and magnesium hydroxide (Mg(OH)₂) serve to supply Mg to the coating film. In an exemplary embodiment of the present disclosure, the annealing separating agent composition may be present in the form of a slurry for easy application on the surface of the grain-oriented electrical steel sheet substrate. When water is included as a solvent of the slurry, magnesium oxide is easily dissolved in water and may be present in the form of magnesium hydroxide. Therefore, in an exemplary embodiment of the present disclosure, magnesium oxide and magnesium hydroxide are treated as one component.

The annealing separating agent composition according to an exemplary embodiment of the present disclosure may further include 0.5 to 10 wt% of ceramic powder. The ceramic powder may include one or more selected from MnO, Al₂O₃, SiO₂, TiO₂, and ZrO₂. The ceramic powder is further included in an appropriate amount, the insulating properties of the formed coating film 20 may be further improved.

The annealing separating agent composition according to an exemplary embodiment of the present disclosure may further include 1 to 10 wt% of Sb₂(SO₄)₃, SrSO₄, BaSO₄, or a combination thereof. By further including Sb₂(SO₄)₃, SrSO₄, BaSO₄, or a combination thereof in an appropriate amount, a grain-oriented electrical steel sheet having excellent surface gloss and high illuminance may be manufactured.

The annealing separating agent composition may further include a solvent for uniform dispersion and easy application of solids. As the solvent, water, alcohol, and the like may be used, and the solvent may be included at 300 to 1000 parts by weight with respect to 100 parts by weight of the solid content. As such, the annealing separating agent composition may be in the form of a slurry.

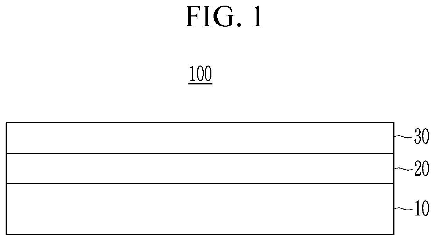

The grain-oriented electrical steel sheet 100 according to an exemplary embodiment of the present disclosure has a coating film 20 including boron and forsterite formed on one or both surfaces of a grain-oriented electrical steel sheet substrate 10. FIG. 1 is a schematic side cross-sectional view of a grain-oriented electrical steel sheet according to an exemplary embodiment of the present disclosure. FIG. 1 shows a case in which the coating film 20 is formed on an upper surface of the grain-oriented electrical steel sheet substrate 10.

The coating film 20 including boron and forsterite has better coating film tension imparting ability and insulating properties than a conventional forsterite coating film, has a lowered melting point, so that a coating film 20 formation temperature in the second recrystallization annealing process is lowered, thereby securing surface properties of good quality. In addition, since the coating film 20 produced in a low temperature range has an effect of suppressing decomposition of an AIN-based inhibitor which has a decisive influence on second recrystallization formation, excellent magnetic quality may be secured. Since this has been described above, duplicate description will be omitted.

The coating film 20 may include 1 to 40 wt% of B, 10 to 70 wt% of Mg, 3 to 70 wt% of Si, 10 to 90 wt% of O, and a remainder of Fe. The Mg, Si, and Fe element compositions are diffused from the steel sheet and derived from the annealing separating agent component. O may be derived from the annealing separating agent component or penetrated in a heat treatment process. Other impurities components such as carbon (C) may be further included. B is derived from the annealing separating agent component, and the coating film 20 includes B in the above range, thereby improving coating film tension imparting ability and insulating properties. The element contents in the coating film in an exemplary embodiment of the present disclosure may be different depending on a measurement position, and the element range described above refers to an average element content in the coating film 20. More specifically, 1.0 to 40.0 wt% of B, 15.0 to 50.0 wt% of Mg, 10.0 to 30.0 wt% of Si, 20.0 to 50.0 wt% of O, and a remainder of Fe may be included.

B may be present in the form of a boron aggregate such as BBr₃, BCl₃, BF, BF₃, BI₃, BN, B(NO₃)₃, B(OH)₃, BP, BPO₄, B₂F₄, B₂Cl₄, B₂H₆, BH₃NH₃, B₂O, B₂O₃, B₂S₃, B₄C, B₆O, B₅H₉, B₅H₁₁, B₆H₁₀, B₆H₁₂, LiBH₄, H₃BO₃, Na₂B₄O₇, H₂B₄O₇, B₂O₃, B₂O, B₂C, MgB₂, H[B(OH)₄], H[BF(OH)₃], H[BF₂(OH)₂], and H[BF₃(OH)] in the coating film 20. Particularly, B may be present as borosilicate, magnesium borate, boroaluminosilicate, or a composite thereof. When the boron agglomerate is present in the coating film 20, coating film tension imparting ability and insulating properties are improved. In order to improve appropriate coating film tension imparting ability and insulating properties, the boron agglomerate may have an average particle diameter of 1 to 500 nm. Herein, the average particle diameter refers to a number average particle diameter of the boron agglomerate, obtained by observing the surface of the coating film 20 having an area of 400 µm × 400 µm or more with an electron probe X-ray micro-analyzer (EPMA) which is a non-destructive analysis method. The particle diameter refers to a diameter equivalent to a circle of the boron agglomerate. The boron agglomerate refers to an agglomerate in which B agglomerates into a matrix level or higher of the coating film 20 and agglomerates into a form having a particle diameter of 1 nm or more. More specifically, the boron agglomerate may have an average particle diameter of 3 to 500 nm. More specifically, the boron agglomerate may have an average particle diameter of 10 to 200 nm.

In addition, the boron agglomerate may occupy 1 to 45% by area of the coating film 20. More specifically, it may occupy 2 to 35% by area.

The coating film 20 may have a thickness of 0.1 to 10 µm. When the thickness of the coating film 20 is too small, coating film tension imparting ability is deteriorated, so that iron loss may be deteriorated. When the thickness of the coating film 20 is too large, a spot rate is decreased, so that transformer characteristics may be deteriorated. Therefore, the thickness of the forsterite coating film 20 may be adjusted to the range described above. More specifically, the thickness of the forsterite coating film 20 may be 0.8 to 6 µm. A boundary between the coating film 20 and the steel sheet substrate 10 may be divided into the coating film 20 including 5 wt% or more of Mg and a part including less than 5 wt% of Mg in the thickness direction of the steel sheet. Even when a ceramic layer 30 is further formed on the coating film 20, the layer may be divided into the coating film 20 including 5 wt% or more of Mg and the ceramic layer 30 including less than 5 wt% of Mg, based on 5 wt% of Mg.

The grain-oriented electrical steel sheet 100 according to an exemplary embodiment of the present disclosure may have a ceramic layer 30 further formed on the coating film 20. FIG. 1 shows an example in which the ceramic layer 30 is further formed on the coating film 20.

The ceramic layer 30 may have a thickness of 0.5 to 5 µm. When the thickness of the ceramic layer 30 is too small, the insulating effect of the ceramic layer 30 may be less shown. When the thickness of the ceramic layer 30 is too large, the adhesiveness of the ceramic layer 30 is low, and peeling may occur. Therefore, the thickness of the ceramic layer 30 may be adjusted to the range described above. More specifically, the thickness of the ceramic layer 30 may be 0.8 to 3.2 µm.

The ceramic layer 30 may include ceramic powder. The ceramic powder may be one or more selected from Al₂O₃, SiO₂, TiO₂, ZrO₂, Al₂O₃·TiO₂, Y₂O₃, 9Al₂O₃·2B₂O₃, BN, CrN, BaTiOs, SiC, and TiC. The ceramic powder may have a particle diameter of 2 to 900 nm. When the particle diameter of the ceramic powder is too small, formation of the ceramic layer may be difficult. When the particle diameter of the ceramic powder is too large, surface roughness is roughened and surface defects may occur. Therefore, the particle diameter of the ceramic powder may be adjusted to the range described above.

The ceramic powder may be in any one or more forms selected from the group consisting of spherical, plate-shaped, and acicular forms.

The ceramic layer 30 may further include a metal phosphate. The metal phosphate may include one or more selected from Mg, Ca, Ba, Sr, Zn, Al, and Mn. When the metal phosphate is further included, the insulation of the ceramic layer 30 is further improved.

The metal phosphate may be formed of a compound by a chemical reaction between a metal hydroxide and phosphoric acid (H₃PO₄).

The metal phosphate may be formed of a compound by a chemical reaction between a metal hydroxide and phosphoric acid (H₃PO₄), and the metal hydroxide may be at least one or more selected from the group consisting of Ca(OH)₂, Al(OH)₃, Mg(OH)₂, B(OH)₃, Co(OH)₂ 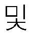 Cr(OH)₃.

Specifically, the metal atom of the metal hydroxide may be formed by forming a single bond, a double bond, or a triple bond by a substitution reaction with phosphorus of phosphoric acid, and may be formed of a compound including unreacted free phosphoric acid (H₃PO₄) in an amount of 25 wt% or less.

The metal phosphate is formed of a compound by a chemical reaction of a metal hydroxide and phosphoric acid (H₃PO₄), and a weight ratio of the metal hydroxide to phosphoric acid may be represented as 1:100 to 40:100.

When the metal hydroxide is included too much, a chemical reaction is not completed to produce precipitates, and when the metal hydroxide is included too small, corrosion resistance may be deteriorated, and thus, the range may be limited as described above.

In an exemplary embodiment of the present disclosure, the effect of the annealing separating agent composition and the coating film 20 is shown regardless of the components of the grain-oriented electrical steel sheet substrate 10. Additionally, the components of the grain-oriented electrical steel sheet substrate 10 are described as follows.

The grain-oriented electrical steel sheet substrate 10 includes: 2.8 to 4.5 wt% of silicon (Si), 0.020 to 0.040 wt% of aluminum (Al), 0.01 to 0.20 wt% of manganese (Mn), and 0.01 to 0.15 wt% of antimony (Sb), tin (Sn), nickel (Ni), or combination thereof, with a remainder of Fe and other unavoidable impurities.

Hereinafter, the reasons for limiting the components of the grain-oriented electrical steel sheet substrate 10 component will be described.

### Si: 2.8 to 4.5wt%

Silicon (Si) serves to increase resistivity of steel to decrease iron loss, and when the content of Si is too low, the resistivity of steel is small, so that iron loss characteristics are deteriorated and a phase transformation section exists during high-temperature annealing to make second recrystallization unstable. When the content of Si is too high, brittleness is large so that cold rolling may become difficult. Therefore, the content of Si may be adjusted to the range described above. More specifically, Si may be included at 3.0 to 4.0 wt%.

### Al: 0.020 to 0.040wt%

Aluminum (Al) is a component which finally becomes a nitride in the form of AlN, (AI,Si)N, and (AI,Si,Mn)N and acts as an inhibitor. When the content of Al is too low, it is difficult to expect a sufficient effect as the inhibitor. In addition, when the content of Al is too high, Al-based nitrides are too coarsely precipitated and grow, and thus, may have an insufficient effect as an inhibitor. Therefore, the content of Al may be adjusted to the range described above.

### Mn: 0.01 to 0.20wt%

Manganese (Mn) has an effect of increasing resistivity to decrease iron loss, like Si, and is an important element in suppressing growth of first recrystallized grains to cause second recrystallization, by forming (AI,Si,Mn)N precipitates by a reaction with nitrogen introduced by a nitriding treatment with Si. However, when the content of Mn is too high, austenite phase transformation is promoted during hot rolling, so that the size of first recrystallized grains is decreased to make the second recrystallization unstable. In addition, when the content of Mn is too low, an austenite fraction is increased during hot rolling reheating as an element for forming austenite, so that the high capacity of precipitates is increased, and thus, an effect of preventing first recrystallized grains from being excessive by precipitate refining when reprecipitation and MnS formation may occur insufficiently. Therefore, the content of Mn may be adjusted to the range described above.

### Sb, Sn, Ni or combination thereof: 0.01 to 0.15wt%

Since antimony (Sb), tin (Sn), and nickel (Ni) which are crystal grain boundary segregated elements are elements which prevent movement of a crystal grain boundary, they promote production of Goss crystal grains in an {110}<001> orientation as a crystal grain growth inhibitor to allow second recrystallization to be developed well, and thus, are important elements for crystal grain size control. When the content of Sb, Sn, or Ni alone or a composite thereof is too low, the effect may be poor. When the content of Sb, Sn, or Ni alone or a combination thereof is too high, crystal grain boundary segregation occurs severely, so that the brittleness of a steel sheet increased to cause plate fracture during rolling. More specifically, 0.01 to 0.05 wt% of Sb, 0.01 to 0.12 wt% of Sn, and 0.01 to 0.06 wt% of Ni may be included.

### C: 0.01wt% or less

Since C is a component which does not help much in improving magnetic properties of the grain-oriented electrical steel sheet in an exemplary embodiment according to the present disclosure, it is preferred to remove C as much as possible. However, when C is included at a certain level or higher, it promotes austenite transformation of steel during a rolling process to refine the hot rolled structure during hot rolling and has an effect of helping formation of uniform microstructure, and thus, it is preferred that the content of C in a slab is included at 0.03 wt% or more. However, when the content of C is excessive, a coarse carbide is produced and it becomes difficult to remove C during decarbonization, and thus, it is preferred that the content of C is 0.08 wt% or less. Carbon is decarbonized by a decarbonization annealing process in the manufacturing process of the grain-oriented electrical steel sheet, and C is included at 0.01 wt% or less in the finally manufactured grain-oriented electrical steel sheet.

### N: 0.005 to 0.05 wt%

N is an element which reacts with Al and the like to refine crystal grains. When these elements are appropriately distributed, the structure may be appropriately refined after cold rolling to help to secure an appropriate first recrystallization particle size, as described above. However, when the content is excessive, the first recrystallized grains are excessively refined, and as a result, a driving force to cause crystal grain growth during second recrystallization due to the fine crystal grains is increased, so that even crystal grains in an unpreferred orientation may grow. In addition, the content of N is excessive, it takes much time to remove N in the final annealing process, and thus, it is not preferred. Therefore, the upper limit of the nitrogen content in a slab should be 0.005 wt%, and since the content of nitrogen which is solid-solubilized again during slab reheating should be 0.001 wt% or more, it is preferred that the lower limit of the content of nitrogen in slab is 0.001 wt%. In the manufacturing process of the grain-oriented electrical steel sheet, nitrogen partially penetrates by a nitro-annealing process and 0.005 to 0.05 wt% of N is included in the finally manufactured grain-oriented electrical steel sheet.

A method for manufacturing a grain-oriented electrical steel sheet according to an exemplary embodiment of the present disclosure includes: preparing a steel slab (S10); hot rolling the steel slab to manufacture a hot rolled sheet (S20); cold rolling the hot rolled sheet to manufacture a cold rolled sheet (S30); first recrystallization annealing the cold rolled sheet (S40); applying an annealing separating agent on a surface of the first recrystallization annealed steel sheet (S50); and second recrystallization annealing the steel sheet coated with the annealing separating agent (S60). In addition, the method for manufacturing of a grain-oriented electrical steel sheet may further include other steps.

First, in (S10), a steel slab is prepared. Since the components of the steel slab are described in detail for the components of the grain-oriented electrical steel sheet described above, repeated description will be omitted. Next, the steel slab may be heated. Herein, the heating of the slab may be performed at 1,200°C or lower by a low temperature slab method.

Next, in (S20), the heated steel slab is hot rolled to manufacture a hot rolled sheet. After (S20), the manufactured hot rolled sheet may be annealed by hot rolling.

Next, in (S30), the hot rolled sheet is cold rolled to manufacture a cold rolled sheet. In (S30), the cold rolling may be performed once, or cold rolling including intermediate annealing may be performed two or more times.

Next, in (S40), the cold rolled sheet is first recrystallization annealed. Herein, the first recrystallization annealing of the cold rolled sheet may include decarbonization annealing and nitriding annealing the cold rolled steel sheet simultaneously, or decarbonization annealing and then nitriding annealing the cold rolled steel sheet.

Next, in (S50), an annealing separating agent is applied on the surface of the first recrystallization annealed steel sheet. Since the annealing separating agent is described in detail, repeated description will be omitted.

An application amount of the annealing separating agent may be 1 to 20 g/m². When the application amount of the annealing separating agent is too small, the coating film may not be formed well. When the application amount of the annealing separating agent is too large, it may affect second recrystallization. Therefore, the application amount of the annealing separating agent may be adjusted to the range described above.

Next in (S60), the steel sheet coated with the annealing separating agent is second recrystallization annealed. In the process of second recrystallization annealing, a coating film 20 including boron and forsterite is formed.

A first cracking temperature during the second recrystallization annealing may be 650 to 750°C, and a secondary cracking temperature may be 1100 to 1250°C. The temperature may be controlled under the conditions of 15°C/hr in a heating temperature section. In addition, as for the gas atmosphere, in the first cracking step, it is performed in an atmosphere including 220 to 30 vol% of nitrogen and 70 to 80 vol% of hydrogen, and in the second cracking step, a 100% hydrogen atmosphere is maintained for 15 hours and then furnace cooling may be performed. The coating film 20 may be formed well by the conditions described above.

After (S60), forming a ceramic layer 30 may be further included. Since the ceramic layer 30 is described in detail, repeated description will be omitted. As a method for forming a ceramic layer 30, ceramic powder may be sprayed on the coating film 20 to form the ceramic layer. Specifically, methods such as plasma spray coating (plasma spray), higher speed flame spray coating (high velocity oxy fuel), aerosol deposition, and low temperature spray coating (cold spray) may be applied. More specifically, a plasma spray coating method of supplying gas including Ar, H₂, N₂, or He to a heat source plasmaized with an output of 20 to 300 kW with ceramic powder to form the ceramic layer may be used. In addition, as a plasma spray coating method, gas including Ar, H₂, N₂, or He may be supplied to a heat source plasmaized with an output of 20 to 300 kW in a mixture suspension form of ceramic powder and a solvent to form the ceramic layer. Herein, the solvent may be water or alcohol.

In addition, as a method for forming the ceramic layer 30, a method of applying a composition for forming a ceramic layer including ceramic powder and a metal phosphate to form a ceramic layer may be used.

After forming the ceramic layer 30, magnetic domain refinement may be performed, if necessary.

Hereinafter, the present disclosure will be described in more detail by the examples. However, the examples are only for illustrating the present disclosure, and the present disclosure is not limited thereto.

Experimental Example 1: Characteristics of each of annealing separating agent components and ceramic layer components

### Example 1

A slab including 3.4 wt% of silicon (Si), 0.03 wt% of aluminum (Al), 0.05 wt% of manganese (Mn), 0.04 wt% of antimony (Sb), 0.09 wt% of tin (Sn), 0.02 wt% of nickel (Ni), 0.06 wt% of carbon (C), and 40 ppm by weight of nitrogen (N) with a remainder of Fe and other unavoidable impurities was prepared.

The slab was heated at 1150°C for 220 minutes, and hot rolled to a thickness of 2.3 mm to manufacture a hot rolled sheet.

The hot rolled sheet was heated to 1120°C, maintained at 920°C for 95 seconds, quenched in water to perform pickling, and then cold rolled to a thickness of 0.23 mm to manufacture a cold rolled sheet.

The cold rolled sheet was added to a furnace maintained at 850°C, and maintained in a gas mixed atmosphere of 74 vol% of hydrogen, 25 vol% of nitrogen, and 1 vol% of dried ammonia for 180 seconds to perform nitrodecarbonization and first recrystallization annealing simultaneously, thereby manufacturing a first recrystallization annealed steel sheet.

As an annealing separating agent composition, 30 wt% of a boron compound (BN), 3 wt% of hydroxide cobalt (Co(OH)₂), 5 wt% of titanium oxide, 5 wt% of Sb₂(SO₄)₃, and a remainder of magnesium oxide (MgO) were mixed with distilled water to prepare a slurry form, and the slurry was applied on a first recrystallization annealed steel sheet using a roll, and then second recrystallization annealed.

During the second recrystallization annealing, a first cracking temperature was 700°C and a second cracking temperature was 1200°C, and the temperatures were controlled at 15°C/hr in a heating temperature section. In addition, the atmosphere up to 1200°C was a mixed gas atmosphere of 50 vol% of nitrogen and 50 vol% of hydrogen, and after reaching 1200°C, the hydrogen gas atmosphere of 100 vol% was maintained for 20 hours and furnace cooling was performed.

Thereafter, argon (Ar) gas was supplied to a heat source plasmaized with an output of 250 kW with TiO₂ as ceramic powder, thereby forming a ceramic layer having a thickness of 0.9 µm on a final annealed surface.

### Examples 2 to 8

A coating film was formed in the same manner as in Example 1, except that boron compound and metal hydroxide components in the annealing separating agent were replaced as shown in Table 1. In addition, the powder of the ceramic layer components summarized in the following Table 1 was supplied to the surface of the formed forsterite coating film including boron to form a ceramic layer.

### Example 9

A coating film was formed in the same manner as in Example 1, except that the boron compound and metal hydroxide components were replaced as shown in Table 1, and a ceramic layer was not formed.

### Example 10

A coating film was formed in the same manner as in Example 1, except that an annealing separating agent composition including 25 wt% of a boron compound, 65 wt% of magnesium oxide, 5 wt% of titanium oxide, and 5 wt% of Sb₂(SO₄)₃ was used, and a ceramic layer was not formed.

### Comparative Example 1

The process was performed in the same manner as in Example 1, except that an annealing separating agent composition including 90 wt% of magnesium oxide, 5 wt% of titanium oxide, and 5 wt% of Sb₂(SO₄)₃ was used.

### Comparative Example 2

The process was performed in the same manner as in Example 1, except that an annealing separating agent composition including 100 wt% of a boron compound was used.

### Comparative Example 3

The process was performed in the same manner as in Example 1, except that an annealing separating agent composition including 90 wt% of a boron compound, 5 wt% of titanium oxide, and 5 wt% of Sb₂(SO₄)₃ was used.

### Comparative Example 4

The process was performed in the same manner as in Example 1, except that an annealing separating agent composition including 15 wt% of a boron compound, 5 wt% of titanium oxide, 5 wt% of Sb₂(SO₄)₃, and 75 wt% of magnesium oxide was used.

### Comparative Example 5

The process was performed in the same manner as in Example 1, except that an annealing separating agent composition including 15 wt% of a boron compound, 5 wt% of titanium oxide, 10 wt% of aluminum hydroxide, and 70 wt% of magnesium oxide was used.

The elemental contents in the forsterite coating film on the grain-oriented electrical steel sheets manufactured in the examples and the comparative examples were analyzed by an electron probe X-ray micro-analyzer (EPMA) which is a non-destructive analysis method.

The boron agglomerate in the forsterite coating film on the grain-oriented electrical steel sheets manufactured in the examples and the comparative examples was analyzed by removing a ceramic layer when the ceramic layer was formed, and observing an area of 400 µm × 400 µm of the surface of the forsterite coating film by an electron probe X-ray micro-analyzer (EPMA).

The magnetic properties of the grain-oriented electrical steel sheets manufactured in the examples and the comparative examples were evaluated under the conditions of 1.7 T and 50 Hz.

W_{17/50} refers to power loss (W/kg) shown when a magnetic field at a frequency of 50 Hz was magnetized with an alternating magnetic field of 1.7 Tsela. Herein, Tesla is a unit of a magnetic flux density meaning a magnetic flux per unit area. B₈ is a magnetic flux density value (Tesla) flowing in the electrical steel sheet when a current amount having a 800 A/m size was flowed on a winding wire wrapped around an electrical steel sheet.

In addition, insulating properties were measured on the upper coating film using a Franklin measuring instrument in accordance with the ASTM A717 international standards.

In addition, adhesiveness is shown as minimum arc diameter having no coating film peeling when a specimen was bent at 180° in contact with an arc of 10 to 100 mm.

In addition, surface properties were results of forming a uniform coating film and evaluating a uniform color degree by the naked eye.

**(Table 1)**

| Classification | Annealing separating agent component (solid content: 100 wt%) | | | Ceramic layer component |
|---|---|---|---|---|
| | Content of boron compound (wt%) | Type of boron compound | Metal hydroxide (wt%) | |
| Example 1 | 30 | BN | Co (3%) | TiO₂ |
| Example 2 | 25 | B(NO₃)₃ | Cu (20%) | Al₂O₃ |
| Example 3 | 30 | B(OH)₃ | Sr 11% | 9Al₂O₃·2B₂O₃ |
| Example 4 | 35 | BPO₄ | Ba (0.1%) | BN |
| Example 5 | 40 | B₂O₃ | Pd (0.5%) | SiC |
| Example 6 | 50 | LiBH₄ | In (3.3%) | Al₂O₃ |
| Example 7 | 70 | Na₂B₄O₇ | Bi (2.7%) | Al₂O₃ |
| Example 8 | 45 | B₂C | Sn (8.5%) | TiO₂ |
| Example 9 | 30 | H[BF (OH)₃] | Ni (1.5%) | - |
| Example 10 | 25 | BH₃NH₃ | - | - |
| Comparative Example 1 | - | - | - | - |
| Comparative Example 2 | 100 | BCl₃ | - | - |
| Comparative Example 3 | 90 | BH₃NH₃ | - | - |
| Comparative Example 4 | 15 | Na₂B₄O₇ | - | Al₂O₃ |
| Comparative Example 5 | 15 | BN | Al (10%) | Al₂O₃ |

**(Table 2)**

| Classification | Content of element in forsterite coating film (wt%) | | | | B agglomerate | | Thickness of forsterite coating film (µm) |
|---|---|---|---|---|---|---|---|
| | B | Mg | Si | O | Average particle diameter (nm) | Area fraction (%) | |
| Example 1 | 1.1 | 32.7 | 19.0 | 45.2 | 1 | 2.5 | 2.8 |
| Example 2 | 5.7 | 31.4 | 18.2 | 44.4 | 3.8 | 6.5 | 4.1 |
| Example 3 | 10.5 | 28.7 | 25.2 | 35.1 | 15.7 | 15.4 | 1.9 |
| Example 4 | 15.0 | 29.0 | 17.7 | 38.2 | 16.3 | 20.2 | 2.5 |
| Example 5 | 18.1 | 33.6 | 14.7 | 33.4 | 19.2 | 25.4 | 1.7 |
| Example 6 | 21.1 | 43.2 | 13.2 | 21.9 | 55.1 | 29.5 | 3.8 |
| Example 7 | 24.0 | 23.7 | 20.4 | 31.3 | 71.3 | 31.6 | 3.9 |
| Example 8 | 27.1 | 18.1 | 27.0 | 25.9 | 150.5 | 33.5 | 3.3 |
| Example 9 | 31.3 | 22.8 | 13.2 | 30.0 | 376.5 | 36.1 | 1.3 |
| Example 10 | 35.5 | 19.5 | 17.6 | 26.7 | 500.0 | 40.1 | 5.4 |
| Comparat ive Example 1 | 0.1 | 30.0 | 17.4 | 39.6 | | -- | 1.2 |
| Comparat ive Example 2 | 75.7 | 3.1 | 1.8 | 4.1 | 620 | 77.4 | 0.2 |
| Comparat ive Example 3 | 90.6 | 1.7 | 1.0 | 2.3 | 1020 | 91.2 | 0.1 |
| Comparat ive Example 4 | 0.3 | 31.7 | 18.4 | 41.9 | | | 1.3 |
| Comparat ive Example 5 | 0.9 | 32.4 | 18.8 | 42.8 | | 0.1 | 1.4 |

**(Table 3)**

| Classifica tion | Iron loss (W_{17/50}, W/kg) | Magnetic flux density (B₈, T) | Insulation (mA) | Adhesiven ess (mmϕ) | Surface properties |
|---|---|---|---|---|---|
| Example 1 | 0.69 | 1.925 | 35 | 20 | Uniform |
| Example 2 | 0.751 | 1.918 | 415 | 20 | Uniform |
| Example 3 | 0.735 | 1.915 | 330 | 15 | Uniform |
| Example 4 | 0.775 | 1.931 | 245 | 20 | Uniform |
| Example 5 | 0.801 | 1.911 | 120 | 20 | Uniform |
| Example 6 | 0.65 | 1.942 | 130 | 15 | Uniform |
| Example 7 | 0.675 | 1.934 | 15 | 15 | Uniform |
| Example 8 | 0.664 | 1.928 | 32 | 25 | Uniform |
| Example 9 | 0.82 | 1.92 | 610 | 20 | uniform |
| Example 10 | 0.84 | 1.915 | 650 | 20 | uniform |
| Comparat ive Example 1 | 0.981 | 1.91 | 982 | 30 | uniform |
| Comparat ive Example 2 | 1.275 | 1.885 | - | 70 | Extreme surface peeling |
| Comparat ive Example 3 | 1.223 | 1.89 | - | 70 | Extreme surface peeling |
| Comparat ive Example 4 | 0.935 | 1.905 | 815 | 50 | Surface cracked |
| Comparat ive Example 5 | 0.95 | 1.898 | 765 | 50 | Surface cracked |

As shown in Tables 1 to 3, it was confirmed that the characteristics of Examples 1 to 10 were far superior to those of Comparative Examples 1 to 5. Specifically, in Comparative Examples 2 and 3 in which the boron compound was used alone or the boron compound was included in a large amount, it was confirmed that coating film peeling occurred extremely to deteriorate magnetic properties. In addition, in Comparative Examples 1, 4, and 5 in which boron compound was not included or included too little, it was confirmed that surface cracks occurred, so that insulation and magnetic properties were inferior to those of the examples.

Among the examples, when the ceramic layer was further included, it was confirmed that insulating properties were further improved.

Among the examples, when the metal hydroxide was not included, it was confirmed that iron loss characteristics were relatively poor, and this was an effect by suppressing AIN-based decomposition of the metal hydroxide.

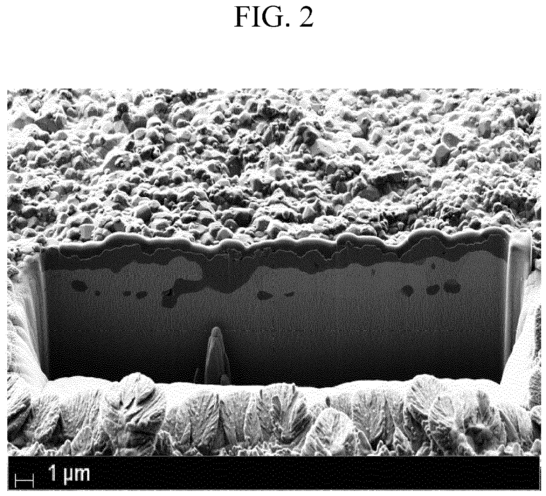

FIG. 2 is a scanning electron micrograph (SEM) of a coating film of the grain-oriented electrical steel sheet manufactured in Example 9. It was confirmed therefrom that a uniform coating film was formed without defects.

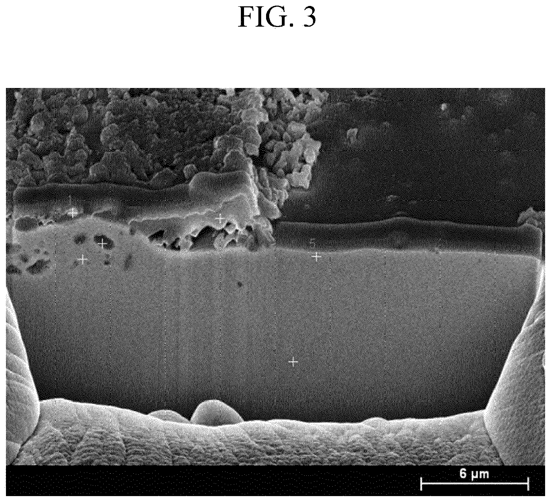

FIG. 3 is a scanning electron micrograph (SEM) of a coating film of the grain-oriented electrical steel sheet manufactured in Comparative Example 2. It was confirmed therefrom that many cracks were formed, which caused surface peeling to be more severe.

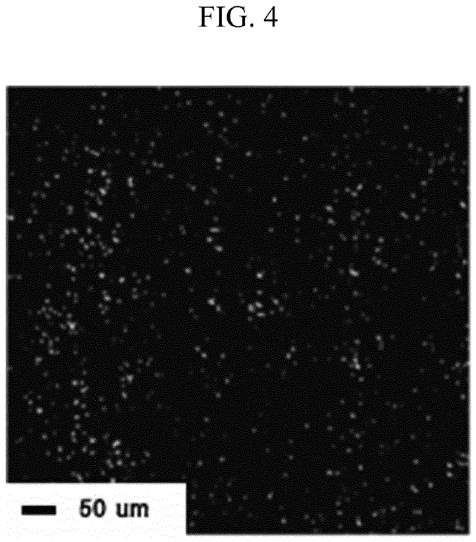

FIG. 4 is results of electron probe micro-analysis (EPMA) of a B element of a coating film of the grain-oriented electrical steel sheet manufactured in Example 3.

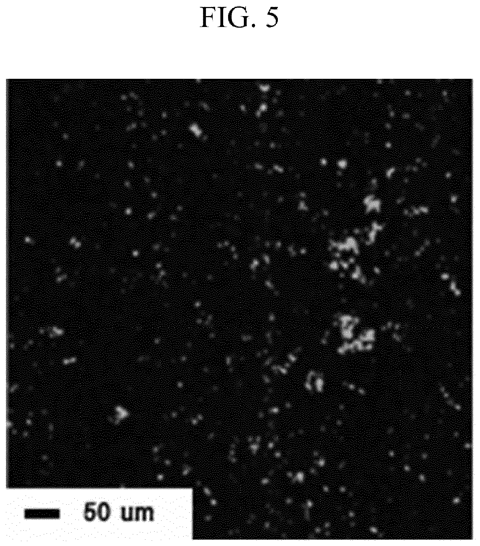

FIG. 5 is results of electron probe micro-analysis (EPMA) of a B element of a coating film of the grain-oriented electrical steel sheet manufactured in Example 6.

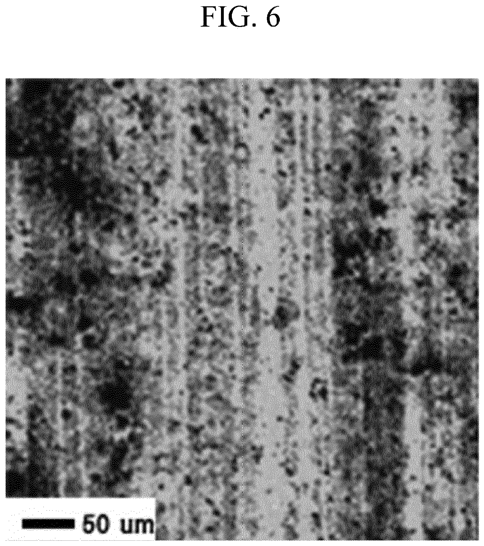

FIG. 6 is results of electron probe micro-analysis (EPMA) of a B element of a coating film of the grain-oriented electrical steel sheet manufactured in Comparative Example 3.

As shown in FIGS. 4 to 6, it was confirmed that the boron agglomerate in the coating film of the grain-oriented electrical steel sheets manufactured in the examples was appropriately formed.

Experimental Example 2: Evaluation of magnetic properties, spot rate, and noise properties of 1000 kVa transformer

### Example 11

A slab including 3.3 wt% of silicon (Si), 0.03 wt% of aluminum (Al), 0.03 wt% of antimony (Sb), 0.05 wt% of tin (Sn), 0.02 wt% of nickel (Ni), 0.05 wt% of carbon (C), and 30 ppm by weight of nitrogen (N) with a remainder of Fe and other unavoidable impurities was prepared.

The slab was heated at 1150°C for 220 minutes, and hot rolled to a thickness of 2.3 mm to manufacture a hot rolled sheet.

The hot rolled sheet was heated to 1120°C, maintained at 920°C for 95 seconds, quenched in water to perform pickling, and then cold rolled to a thickness of 0.23 mm to manufacture a cold rolled sheet.

The cold rolled sheet was added to a furnace maintained at 850°C, and maintained in a gas mixed atmosphere of 74 vol% of hydrogen, 25 vol% of nitrogen, and 1 vol% of dried ammonia for 180 seconds to perform nitrodecarbonization and first recrystallization annealing simultaneously, thereby manufacturing a first recrystallization annealed steel sheet.

As an annealing separating agent composition, 38 wt% of a boron compound (MgB₂), 3.8 wt% of nickel hydroxide, 5 wt% of titanium oxide, 5 wt% of Sb₂(SO₄)₃, and a remainder of magnesium oxide (MgO) were mixed with distilled water to prepare a slurry form, and the slurry was applied on a first recrystallization annealed steel sheet using a roll, and then second recrystallization annealed.

During the second recrystallization annealing, a first cracking temperature was 700°C and a second cracking temperature was 1200°C, and the temperatures were controlled at 15°C/hr in a heating temperature section. In addition, the atmosphere up to 1200°C was a mixed gas atmosphere of 50 vol% of nitrogen and 50 vol% of hydrogen, and after reaching 1200°C, the hydrogen gas atmosphere of 100 vol% was maintained for 20 hours and furnace cooling was performed.

Thereafter, a composition for forming a ceramic layer in which 45 wt% of colloidal silica, 45 wt% of first aluminum phosphate, 5 wt% of chromium oxide, and 5 wt% of nickel hydroxide were mixed was stirred and applied on the surface of the finally annealed sheet to 4.5g/m², and treated in a drying furnace set to 860°C for 120 seconds, a laser magnetic domain refinement treatment was performed, a 1000 kVA transformer was manufactured, and the results of evaluating under 60 Hz conditions depending on the designed magnetic flux density are shown in the following Table 4.

### Comparative Example 6

The process was performed in the same manner as in Example 11, except that an annealing separating agent composition including 90 wt% of magnesium oxide, 5 wt% of titanium oxide, and 5 wt% of Sb₂(SO₄)₃ was used.

The spot rate was measured using a measuring instrument in accordance with the JIS C2550 international standards. A plurality of electrical steel sheet specimens were laminated, a uniform pressure of 1 MPa was applied to the surface, and measurement was performed by dividing a practical weight ratio depending on the lamination of the electrical steel sheet by a theoretical weight through precise height measurement of the four sides of the specimens.

Noise was evaluated in the same manner as in the international regulations IEC61672-1, but evaluated as a noise conversion value [dBA] by obtaining vibration data of the electrical steel sheet instead of sound pressure. The vibration of the electrical steel sheet was measured by measuring a vibration pattern over time in a non-contact manner using a laser doppler method, when a magnetic field at a frequency of 60 Hz was magnetized to 1.7 Tesla with alternating current.

**(Table 4)**

| Classification | Coating film | Iron loss (W_{17/50}, W/kg) | Magnetic flux density (B₈, T) | Spot rate (%) | Noise (dBA) |
|---|---|---|---|---|---|
| Example 11 | Boron and forsterite contained | 0.680 | 1.932 | 97.2 | 49.5 |
| Comparative Example 6 | Forsterite | 0.842 | 1.908 | 96.2 | 55.5 |

As shown in Table 4, it was confirmed that the characteristics of Example 11 were far superior to those of Comparative Example 6.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

### [Description of Symbol]

100: Grain-oriented electrical steel sheet
10: Grain-oriented electrical steel sheet substrate
20: Coating film 30 : Ceramic layer

## Claims

1. An annealing separating agent composition for a grain-oriented electrical steel sheet comprising:
25 to 80 wt% of boron and
a remainder of one or more of magnesium oxide and magnesium hydroxide,
based on a total of 100 wt% of the solid content.

2. The annealing separating agent composition for a grain-oriented electrical steel sheet of claim 1, wherein:
the boron compound includes one or more of BBr₃, BCl₃, BF, BF₃, BI₃, BN, B(NO₃)₃, B(OH)₃, BP, BPO₄, B₂F₄, B₂Cl₄, B₂H₆, BH₃NH₃, B₂O, B₂O₃, B₂S₃, B₄C, B₆O, B₅H₉, B₅H₁₁, B₆H₁₀, B₆H₁₂, LiBH₄, H₃BO₃, Na₂B₄O₇, H₂B₄O₇, B₂O₃, B₂O, B₂C, MgB₂, H[B(OH)₄], H[BF(OH)s], H[BF₂(OH)₂], H[BF₃(OH)], and H[BF₄].

3. The annealing separating agent composition for a grain-oriented electrical steel sheet of claim 1, further comprising:
0.1 to 20 wt% of a metal hydroxide.

4. The annealing separating agent composition for a grain-oriented electrical steel sheet of claim 3, wherein:
the metal hydroxide includes one or more of Ni(OH)₂, Co(OH)₂, Cu(OH)₂, Sr(OH)₂, Ba(OH)₂, Pd(OH)₂, In(OH)₃, Bi(OH)₃, and Sn(OH)₂.

5. The annealing separating agent composition for a grain-oriented electrical steel sheet of claim 1, further comprising:
0.5 to 10 wt% of ceramic powder.

6. The annealing separating agent composition for a grain-oriented electrical steel sheet of claim 5, wherein:
the ceramic powder includes one or more of MnO, Al₂O₃, SiO₂, TiO₂, and ZrO₂.

7. The annealing separating agent composition for a grain-oriented electrical steel sheet of claim 1, further comprising:
1 to 10 wt% of one or more of Sb₂(SO₄)₃, SrSO₄, and BaSO₄.

8. A grain-oriented electrical steel sheet comprising:
a grain-oriented electrical steel sheet substrate and
a coating film which is placed on one or both surfaces of the grain-oriented electrical steel sheet substrate and includes boron and forsterite,
wherein the coating film includes a boron agglomerate and the boron agglomerate has an average particle diameter of 1 to 500 nm.

9. The grain-oriented electrical steel sheet of claim 8, wherein:
the boron agglomerate is included at 1 to 45% by area with respect to the total area of the coating film.

10. The grain-oriented electrical steel sheet of claim 8, wherein:
the coating film includes: 1 to 40 wt% of B, 10 to 70 wt% of Mg, 3 to 70 wt% of Si, 10 to 90 wt% of O, and a remainder of Fe.

11. The grain-oriented electrical steel sheet of claim 8, further comprising:
a ceramic layer placed on the coating film.

12. The grain-oriented electrical steel sheet of claim 11, wherein:
the ceramic layer includes ceramic powder and a metal phosphate.

13. The grain-oriented electrical steel sheet of claim 12, wherein:
the ceramic powder includes one or more selected from Al₂O₃, SiO₂, TiO₂, ZrO₂, Al₂O₃·TiO₂, Y₂O₃, 9Al₂O₃·2B₂O₃, BN, CrN, BaTiOs, SiC, and TiC.

14. A method for manufacturing a grain-oriented electrical steel sheet, the method comprising:
preparing a steel slab;
hot rolling the steel slab to manufacture a hot rolled sheet;
cold rolling the hot rolled sheet to manufacture a cold rolled sheet;
first recrystallization annealing the cold rolled sheet;
applying an annealing separating agent on a surface of the first recrystallization annealed steel sheet; and
second recrystallization annealing the steel sheet coated with the annealing separating agent,
wherein the annealing separating agent includes 25 to 80 wt% of a boron compound and a remainder of one or more of magnesium oxide and magnesium hydroxide, based on a total of 100 wt% of the solid content.

15. The method for manufacturing a grain-oriented electrical steel sheet of claim 14, further comprising:
after the second recrystallization annealing, forming a ceramic layer on a coating film including boron and forsterite.

16. The method for manufacturing a grain-oriented electrical steel sheet of claim 14, wherein:
the forming of a ceramic layer is
spraying ceramic powder on the coating film to form the ceramic layer.
